# EUROPÄISCHE PATENTANMELDUNG

(11) **EP 2 048 095 A1**
(43) Veröffentlichungstag der Anmeldung: **15.04.2009**
(21) Anmeldenummer: 07117219.1
(22) Anmeldetag: 26.09.2007
(51) Int. Cl.: B65G 35/08, A23L 3/00

(54) **Verfahren und Vorrichtung zum Behandeln von Produkten**

(71) Anmelder: Hoegger, Cornel, 9230 Flawil (CH)
(72) Erfinder: Hoegger, Cornel, 9230 Flawil (CH)
(74) Vertreter: Stocker, Kurt

(57) **Zusammenfassung**

Zum Durchführen von Wärmebehandlungen in einer Vorrichtung (1) mit Behandlungszonen (4, 5), die über-einander liegende horizontale Behandlungsabschnitte (3) aufweisen und von denen mindestens eine als Heizzone (4) und mindestens eine als Kühlzone (5) ausgebildet ist, werden Trays (15) für die zu behandelnden Produkte mit einer Fördervorrichtung von einem Eintrittsbereich eines ersten Behandlungsabschnittes (3) durch die Behandlungszonen (4, 5) zu einem Austritts-bereich eines letzten Behandlungsabschnittes (3) gefördert. Um eine Förderung ohne Ketten zu ermöglichen, werden die Trays (15) in der Vorrichtung entsprechend ihrer jeweiligen Position während verschiedener Fördertakte nacheinander bewegt. Auf Behandlungsabschnitten (3) mit einer Förderrichtung nach hinten werden Trays (15) während erster Horizontaltakte in gegen die hintere Seite (2b) der Vorrichtung (1) gestossen. Je anschliessend an einen ersten Horizontaltakt werden die bei der hinteren Seite (2b) jeweils in Förderrichtung vordersten Trays (15) in ersten Vertikaltakten vertikal zum nächsten Behandlungsabschnitt (3) versetzt. Je anschliessend an einen ersten Vertikaltakt werden die Trays (15) auf Behandlungsabschnitten (3) mit einer Förderrichtung nach vorne während zweiter Horizontaltakte gegen die vordere Seite (2a) der Vorrichtung (1) bewegt. Anschliessend an einen zweiten Horizontaltakt werden die bei der vorderen Seite (2a) jeweils in Förderrichtung vordersten Trays (15) in zweiten Vertikaltakten vertikal zum nächsten Behandlungsabschnitt (3) versetzt.

## Beschreibung

Die Erfindung bezieht sich auf Verfahren nach dem Oberbegriff des Anspruches 1 und auf Vorrichtungen nach dem Oberbegriff des Anspruches 5.

Bei der Behandlung oder der Herstellung von Produkten werden häufig Wärmebehand-lungsschritte mit kontinuierlich arbeitenden Vorrichtungen durchgeführt. Die Produkte werden dabei entlang eines Förderweges in Behandlungszonen aufgeheizt und an-schliessend wieder abgekühlt. Wärmebehandlungen sind insbesondere zur Behandlung von Nahrungsmitteln wichtig. Zur Wärmeübertragung wird eine Flüssigkeit, Dampf oder ein Gas verwendet. Die Wahl des Wärme-Transfermediums hängt von der gewünsch-ten Temperaturänderung ab. Bei Wärmebehandlungen mit Temperaturen unter 100°C, also beispielsweise bei der Pasteurisierung, kann Wasser, oder gegebenenfalls Wasser mit Zusätzen, verwendet werden. Zum Erwärmen wird in einer Heizzone zumindest ein erster Kreislauf für ein erstes Medium ausgebildet, wobei mit einer Heizvorrichtung Wärme in diesen ersten Kreislauf eingebracht wird, welche vom ersten Medium zumin-dest teilweise an das Produkt abgegeben wird. Zum Abkühlen wird in einer Kühlzone zumindest ein zweiter Kreislauf für ein zweites Medium ausgebildet, wobei das zweite Medium vom Produkt erwärmt wird und eine Kühlvorrichtung Wärme aus diesem zwei-ten Kreislauf entnimmt. Damit die gewünschte Behandlungswirkung erzielt wird, müssen die Produkte mit vorgegebenen Verweilzeiten durch die Behandlungszonen geführt werden.

Zusätzlich zur mindestens je einen Heiz- und Kühlzone können auch weitere Behandlungszonen vorgesehen werden. Beispielsweise eine Trocknungszone, in der Wasserrückstände von den behandelten Produkten mittels Abblasen und Trocknen beseitigt werden.

Der Platzbedarf einer Wärmebehandlungs-Vorrichtung ist klein, wenn die Behandlungszonen über-einander liegende horizontale Behandlungsabschnitte umfassen. Die Anzahl der horizontalen Behandlungsab-schnitte in der Kühlzone und in der Heizzone wird an die gewünschte Kühl- bzw. Heiz-wirkung angepasst. Die Bewegung in direkt übereinander liegenden Behandlungsabschnitten erfolgt vorzugsweise je in entgegengesetzten Richtungen, so dass nach dem Austritt aus einem Behandlungsabschnitt lediglich eine vertikale Verschiebung und anschliessen direkt der Eintritt in den nächsten Behandlungsabschnitt erfolgen kann. Dadurch bleibt die Länge des Förderwegs klein.

Bei Anlagen, die alle Behandlungsabschnitte der Heiz- und Kühlzone übereinander aufweisen, werden einfache Transportwege erzielt, wenn die kalten Produkte von einer vorderen Seite her in die Heizzonezone eintreten und auf einer hinteren Seite aus der Heizzone austreten, anschliessend von der hinteren Seite her in die Kühlzone eintreten und auf der vorderen Seite aus der Kühlzone austreten. In einer Belad-Station auf der vorderen Seite können die Produkte auf Produktträger bzw. Trays geladen werden. Nach dem Durchlaufen der beiden Behandlungszonen werden die Produkte auf der vorderen Seite in einer Entlad-Station von den Trays entnommen. Die leeren Trays werden auf der vorderen Seite von der Entlad-Station zur Belad-Station gefördert. Die Bewegung vom Ausgang der Heizzone zum Eingang der Kühlzone erfolgt auf der hinteren Seite und ist somit vom Beladen und Entladen räumlich getrennt.

Aus der EP 738 476 A1 ist ein Pasteur mit übereinander angeordneten Behandlungsabschnitten einer Heiz-, einer Kühl- und einer Trocknungszone bekannt. Die Produkte werden auf Lagerbehältern durch alle Behandlungsabschnitte des Pasteurs gefördert. Die Lagerbehälter werden von einem Kettenantrieb bewegt. Zur lagestabilen Führung der Lagerbehälter sind entlang der Behandlungsabschnitte beidseits der Lagerbehälter Schienen angeordnet, auf denen Räder oder Gleiter der Lagerbehälter aufliegen.

Der Kettenantrieb umfasst zwei Förderketten, die auf beiden Seiten der Lagerbehälter und somit bei den Schienen entlang des gesamten Förderweges geführt sind. Die Führung der Förderketten erfolgt über eine Vielzahl von Umlenk-Zahnrädern. Die Lagerbehälter sind mittig mit Bolzen versehen, die in Hülsen der Förderketten eingreifen. Beim vertikalen Übergang von einem Behandlungsabschnitt zum nächsten werden zusätzlich Räder, Gleiter oder Bolzen der Tragbehälter durch, auf dem vertikalen Abschnitt synchron mit den Antriebsketten umlaufende, Hilfsketten mitbewegt. Der Kettenantrieb mit den beiden Förderketten und der verschiedenen Hilfsketten ist aufwändig aufgebaut und benötigt Wartungsarbeiten, wie beispielsweise das Schmieren der Kettenglieder und der Lager der Umlenk-Zahnräder. Schmierrückstände auf den behandelten Produkten sind äusserst unerwünscht.

Zum Fördern von Trays entlang von Schienen sind auch Antriebslösungen ohne Ketten bekannt. Die Schrift US 5 115 907 beschreibt eine Fördervorrichtung zur Rückgabe von Trays in Restaurants mit zwei Schienen und einem Stossstab, der von einem pneumatischen Zylinder entlang der Stabachse vor und zurück bewegt wird. Am Stossstab sind in regelmässigen Abständen Tray-Mitnehmer angeordnet, die beim Vorschub des Stabs an den Trays eingreifen und diese vorschieben. Beim Rückzug des Stabs gleiten die Mitnehmer unter den Trays durch. Die Lösung ist nur für Trays in einer Ebene ausgebildet, der Stab muss eine Vielzahl von Mitnehmern umfassen und sich über die gesamte Förderstrecke erstrecken. Zudem müssen alle Trays für den Eingriff eines Mitnehmers ausgebildet sein.

Die Schrift US 5 320 213 zeigt eine ähnliche Lösung wie die US 5 320 213, wobei nun zwei Stossstäbe mit je einem Antriebszylinder eingesetzt sind, damit Gegenstände in beide Richtungen gefördert werden können.

Die Schrift US 5 320 210 beschreibt eine Fördervorrichtung für Trays, die zum Beladen und Entleeren einer Behandlungskammer eingesetzt werden kann. Die Trays werden auf Führungsschienen bewegt und umfassen Verbindungselemente zum vorübergehenden Verbinden aneinander anschliessender Trays. Die Trays werden von Stoss- bzw. Ziehvorrichtungen bewegt. Die Trays werden mit mindestens einem Beschickungsförderer in die Behandlungskammer gebracht und mit einem Entladeförderer entladen. Es ist auch eine Behandlungskammer mit einem Lift auf der Beschickungsseite und einem Lift auf der Entladseite beschrieben. Die Stoss- bzw. Ziehvorrichtungen sind auf den beiden Liften angeordnet. Der Nachteil dieser Förderung besteht darin, dass Betätigungsvorrichtungen auf beweglichen Liften angeordnet werden müssen, wobei zudem zwei Betätigungsvorrichtungen benötigt werden. Weil das Entladen vom Beschicken getrennt ist, müssen die Trays Verbindungselemente aufweisen und mittels einer Ziehvorrichtung entladen werden.

Die erfindungsgemässe Aufgabe besteht nun darin ein Verfahren und eine Vorrichtung zu finden, so dass die Produkte mit kleinem Aufwand durch übereinander liegende Behandlungsabschnitte bewegt und in vertikaler Richtung versetzt werden können. Insbesondere soll die Wartung der Fördervorrichtung möglichst einfach sein. Die Produkte werden auf Transportbehältern transportiert. Weil Transportbehälter im Gebiet der Produktebehandlung auch im deutschen Sprachbereich meist als Trays bezeichnet werden, wird nachfolgend die Bezeichnung Tray verwendet.

Die Aufgabe wird durch die Merkmale der Ansprüche 1 und 5 gelöst. Die abhängigen Patentansprüche beschreiben bevorzugte Ausführungsformen.

Bei der Lösung der Aufgabe wurde erkannt, dass die aus dem Stande der Technik bekannten Tray-Förderer mit zwei Förderketten, an denen die Trays festgesetzt werden, alle Trays in einer Wärmebehandlungs-Anlage immer gleichzeitig bzw. miteinander bewegen. Wenn die Trays nicht mehr alle gleichzeitig bewegt werden, kann auf durchgehende Förderketten und den damit verbundenen Wartungsaufwand verzichtet werden. Gemäss der vorliegenden Erfindung werden die Trays in der Anlage entsprechend ihrer jeweiligen Position während verschiedener Fördertakte nacheinander bewegt. Im jeweiligen Fördertakt werden nur Trays mit der gleichen Bewegungsart gleichzeitig bewegt, wobei vier wesentliche Bewegungsarten unterschieden werden, nämlich eine horizontale Bewegung nach hinten und eine entgegengesetzte Bewegung nach vorne sowie vertikale Bewegungen auf der vorderen und der hinteren Seite der Anlage. Das nacheinander bzw. taktweise Durchführen der vier Bewegungsarten erlaubt eine einfache Förderung und einen einfachen Aufbau der Fördervorrichtung. Es muss jeweils direkt vor der Durchführung einer Bewegungsart in Bewegungsrichtung vor jedem vordersten zu bewegenden Tray dieser Bewegungsart ein Freiplatz vorliegen. Nach der Durchführung dieser Bewegungsart steht in Bewegungsrichtung vor jedem vordersten zu bewegenden Tray der nächsten Bewegungsart ein Freiplatz bereit.

Die erfinderische Lösung umfasst in den Behandlungsabschnitten Schienen für die Trays. Um die Trays auf den Schienen nach hinten oder nach vorne zu bewegen, ist mindestens ein Antriebsrechen bzw. Schubgestänge vorgesehen, der bzw. das bei jedem Behandlungsabschnitt nur das hinterste Tray stösst, wobei die Trays aneinander anstehen und somit zusammen mit dem hintersten Tray auch alle vorausgehenden Trays in die entsprechende Richtung verschoben werden. Die Trays auf direkt übereinander liegenden Behandlungsabschnitten haben zueinander entgegengesetzte Förderrichtungen und werden in entsprechenden ersten bzw. zweiten Horizontaltakten des Fördervorgangs bewegt.

Wenn Trays von einer vorderen Seite der Anlage her auf einen Behandlungsabschnitt gelangen, so werden sie während erster Horizontaltakte nach hinten bzw. gegen die hintere Seite der Anlage bewegt, wo vor dieser Bewegung auf jeder Behandlungsebene je ein Freiplatz in einem Bereich für die Vertikalbewegung bereitgestellt ist. Die bei der hinteren Seite jeweils vordersten Trays werden in ersten Vertikaltakten je anschliessend an einen ersten Horizontaltakt vertikal zum nächsten Behandlungsabschnitt versetzt. Vor der Vertikalbewegung ist lediglich ein Freiplatz in der vertikalen Bewegungsrichtung vor den Trays nötig.

Auf dem jeweiligen nächsten Behandlungsabschnitt werden die Trays nun während zweiter Horizontaltakte nach vorne bzw. gegen die vordere Seite der Anlage bewegt, wo vor dieser Bewegung auf jeder Behandlungsebene je ein Freiplatz in einem Bereich für die Vertikalbewegung bereitgestellt ist. Die bei der vorderen Seite jeweils vordersten Trays werden in zweiten Vertikaltakten je anschliessend an einen zweiten Horizontaltakt vertikal zum nächsten Behandlungsabschnitt versetzt. Vor der Vertikalbewegung ist wieder lediglich ein Freiplatz in der vertikalen Bewegungsrichtung vor den Trays nötig. Auf der jeweils neuen Behandlungsebene werden die vertikal versetzten Trays in einem anschliessenden ersten Horizontaltakt in die Behandlungsabschnitte gestossen und dabei zusammen mit den Trays dieser Behandlungsabschnitte weiter geführt.

Der mindestens eine Antriebsrechen umfasst mindestens ein Schubgestänge und weist auf der vorderen Seite der Anlage erste Schiebekontakte für Trays bei den Eingängen der Behandlungsabschnitte mit einer Förderrichtung nach hinten sowie auf der hinteren Seite der Anlage zweite Schiebekontakte für Trays bei den Eingängen der Behandlungsabschnitte mit einer Förderrichtung nach vorne auf. Das Schubgestänge ist nach hinten bzw. nach vorne verschiebbar gelagert und wird von mindestens einem Antriebselement, vorzugsweise einem Fluidzylinder, bewegt. Die ersten und die zweiten Schiebekontakte sind vorzugsweise an einem einzigen Schubgestänge ausgebildet. Es versteht sich von selbst, dass auch zwei Schubgestänge, eines mit den ersten und eines mit den zweiten Schiebekontakten, je mit eigener Führung und eigenem Antrieb eingesetzt werden könnten.

Für das vertikale Versetzen bei einem ersten bzw. zweiten Vertikaltakt ist ein hinteres bzw. vorderes Hubgestell vorgesehen, wobei das hintere Hubgestell auf der hinteren Seite der Anlage angeordnet ist und das vordere Hubgestell auf der vorderen Seite. Diese Gestelle umfassen mindestens einen, meist aber mindestens zwei übereinander angeordnete Aufnahmeplätze für die Trays, sind vertikal geführt und werden von einem Antrieb nach oben und unten bewegt. Während eines ersten Horizontaltaktes werden von den Behandlungsabschnitten mit einer Förderrichtung nach hinten Trays auf die daran anschliessenden Aufnahmeplätze des hinteres Hubgestelles gestossen. Im anschliessenden ersten Vertikaltakt wird das hintere Hubgestell mit eingeschobenen Trays gehoben. Die Trays befinden sich vor dem Heben auf den Niveaus der Behandlungsabschnitte mit einer Förderrichtung nach hinten. Nach dem Heben befinden sich die Trays auf den Niveaus der Behandlungsabschnitte mit einer Förderrichtung nach vorne und können mit einem zweiten Horizontaltakt in den Behandlungsabschnitt gestossen werden.

Es versteht sich von selbst, dass die Trays vom hinteren Hubgestell nur gehoben werden, wenn der nächste Behandlungsabschnitt über dem aktuellen Behandlungsabschnitt liegt. Wenn in einer Behandlungszone die Behandlungsabschnitte von oben nach unten durchlaufen werden, so müssen die Trays beim ersten Vertikaltakt abgesenkt werden.

Zu den Zeitpunkten der ersten Vertikaltakte ist das vorderen Hubgestell leer. Daher wird das vorderen Hubgestell ohne Trays vorzugsweise mit dem ersten Vertikaltakt zurückgestellt. Bei von unten nach oben durchlaufenen Behandlungsabschnitten wird das vordere Hubgestell beim ersten Vertikaltakt abgesenkt. Bei von oben nach unten durchlaufenen Behandlungsabschnitten würde das vordere Hubgestell beim Zurückstellen angehoben.

Während eines zweiten Horizontaltaktes werden von den Behandlungsabschnitten mit einer Förderrichtung nach vorne Trays auf die daran anschliessenden Aufnahmeplätze des vorderen Hubgestelles gestossen. Im anschliessenden zweiten Vertikaltakt wird das bei der vorderen Seite der Anlage angeordnete vordere Hubgestell mit eingeschobenen Trays gehoben. Die Trays befinden sich vor dem Heben auf den Niveaus der Behandlungsabschnitte mit einer Förderrichtung nach vorne. Nach dem Heben befinden sich die Trays auf den Niveaus der Behandlungsabschnitte mit einer Förderrichtung nach hinten und können mit einem ersten Horizontaltakt in den Behandlungsabschnitt gestossen werden. Es versteht sich von selbst, dass die Trays vom vorderen Hubgestell nur gehoben werden, wenn der nächste Behandlungsabschnitt über dem aktuellen Behandlungsabschnitt liegt. Wenn in einer Behandlungszone die Behandlungsabschnitte von oben nach unten durchlaufen werden, so müssen die Trays auch beim zweiten Vertikaltakt abgesenkt werden.

Zu den Zeitpunkten der zweiten Vertikaltakte ist das hintere Hubgestell leer. Daher wird das hintere Hubgestell vorzugsweise mit dem zweiten Vertikaltakt zurückgestellt. Bei von unten nach oben durchlaufenen Behandlungsabschnitten wird es beim zweiten Vertikaltakt abgesenkt.

Zum Betätigen der Hubgestelle wird mindestens ein Pneumatik- oder Hydraulikzylinder eingesetzt, der über entsprechende Hebelverbindungen die beiden Hubgestelle, wie oben beschrieben koordiniert hebt und senkt. Es versteht sich von selbst, dass die beiden Gestelle auch je von einem eigenen Antrieb angetrieben werden können und dass anstelle eines Pneumatik- oder Hydraulikzylinders auch andere Antriebe eingesetzt werden können. Es muss jeweils gewährleistet werden, dass die Aufnahmeplätze für die Trays in der unteren und der oberen Endposition des Hubgestells direkt an Behandlungsabschnitte anschliessen und der Höhenunterschied der beiden Endpositionen dem Abstand direkt übereinander liegender Behandlungsabschnitte entspricht.

Anstelle eines Hubgestelles, das zwischen einer unteren und einer oberen Endposition bewegt wird, könnten auch Fördereinrichtungen eingesetzt werden, die beidseits der Trays umlaufende Bänder oder Ketten mit vorstehenden Auflageleisten für die Trays umfassen. Mindestens ein Antriebsmotor müsste die Bänder oder Ketten phasenweise so in Bewegung setzen, dass die mit Trays besetzten Auflageleisten je von einem Behandlungsabschnitt zum nächstfolgenden versetzt werden.

Damit nun die Trays durch getaktetes Schieben und vertikales Versetzen entlang des gesamten Förderweges bewegt werden können, erfolgt nach einem ersten Horizontaltakt ein erster Vertikaltakt, dann ein zweiter Horizontaltakt und schliesslich ein zweiter Vertikaltakt. Bei diesem Taktablauf wird zusätzlich ein neues Tray in die Behandlungszone eingebracht und ein Tray aus der Behandlungszone ausgetragen. Dazu wird vor dem ersten Horizontaltakt mit einem Zuführtakt ein Tray zur Eingangsseite des ersten Behandlungsabschnittes der jeweiligen Behandlungszone gebracht, wobei dieses zugeführte Tray dann beim ersten Horizontaltakt vom Schubgestänge auf den ersten Behandlungsabschnitt gestossen wird. Nach dem zweiten Horizontaltakt wird mit einem Weiterführtakt ein Tray von der Ausgangsseite des letzten Behandlungsabschnittes der jeweiligen Behandlungszone weiter geführt. Das weitergeführte Tray kann beispielsweise auf den Weg zu einer nächsten Behandlungszone gebracht werden, wo es mit einem Zuführtakt zur Eingangsseite des ersten Behandlungsabschnittes gelangt. Nach der letzten Behandlungszone wird das behandelte Produkt vom Tray entladen, ein unbehandeltes Produkt auf das Tray geladen und das beladene Tray zum Eingang der ersten Behandlungszone gebracht.

Die erfinderische Lösung ist bereits für die Behandlung von Produkten in einer einzigen Behandlungszone vorteilhaft. Sie eignet sich insbesondere auch für die Behandlung von Produkten in mindestens zwei Behandlungszonen, vorzugsweise für Wärmebehandlungen mit mindestens einer Heizzone und mindestens einer Kühlzone.

Wenn kein erhöhter Abstand zwischen den Behandlungszonen benötigt wird, so könnten alle Behandlungsabschnitte beispielsweise einer Heiz-und einer Kühlzone in gleichen Abständen übereinander angeordnet werden. Wenn die Heizzone unter der Kühlzone angeordnet würde, könnten die Trays mit den beiden Hubgestellen von unten nach oben durch die Behandlungsabschnitte beider Zonen gefördert werden. Es müsste lediglich eine weitere Förderung vom Ausgang der Kühlzone über eine Entlad- und Beladstation zum Eingang der Heizzone gewährleistet werden.

Um eine optimale Ausnützung des Platzes in vertikaler Richtung zu gewährleisten, wird der Abstand zwischen den direkt übereinander liegenden Behandlungsabschnitten einer Behandlungszone minimal gewählt. Zwischen zwei übereinander angeordneten Behandlungszonen wird ein grösserer Abstand benötigt, weil das Wärmetransfermedium zugeführt bzw. aufgefangen werden muss. Daher wird zur Förderung der Trays vom Ausgang der Heizzone zum Eingang der Kühlzone eine von den Hubgestellen getrennte Fördereinrichtung eingesetzt.

Die bevorzugten Wärmebehandlungsvorrichtungen sind im Gegenstromverfahren aufgebaut, so dass die Trays jeweils unten in die Behandlungszone ein- und oben austreten. Das Wärmetransfermedium wird oben eingetragen und unten aufgefangen. Um die Übertragung von Abwärme von der Heizzone zur Kühlzone zu minimieren, wird die Heizzone vorzugsweise über der Kühlzone angeordnet. Zum Absenken der Trays vom Ausgang der Heizzone zum Eingang der Kühlzone wird eine getaktete erste Elevatorvorrichtung verwendet, welche Aufnahmeplätze für die Trays während der Horizontaltakte auf den Niveaus des Heizzonen-Ausgangs und des Kühlzonen-Eingangs stehen lässt.

Vom Ausgang der Kühlzone zum Eingang der Heizzone werden die Trays von einer getakteten zweiten Elevatorvorrichtung bewegt, welche Aufnahmeplätze für die Trays während der Horizontaltakte auf den Niveaus des Kühlzonen-Ausgangs und des Heizzonen-Eingangs stehen lässt. Zudem arbeitet die zweite Elevatorvorrichtung mit einer Entlad- und einer Beladstation zusammen.

Auf den getakteten Elevatorvorrichtungen sind mehrere Trays unterwegs. Daher werden beispielsweise Fördereinrichtungen eingesetzt, die beidseits der Trays umlaufende Bänder oder Ketten mit vorstehenden Auflageleisten für die Trays umfassen. Mindestens ein Antriebsmotor setzt die Bänder oder Ketten phasenweise in Bewegung. Die den Trays zugewandten Auflageleisten bewegen sich zum Absenken von Trays nach unten und zum Heben von Trays nach oben.

Gemäss der erfinderischen Lösung ist es möglich mit einem Schubgestänge die horizontale Tray-Bewegung auf allen Behandlungsabschnitten, die Übergaben aus den bzw. in die Hubgestelle, die Übergabe in die bzw. aus den Elevatorvorrichtungen und auch die Übergabe von der Beladstation sowie zur Entladstation zu gewährleisten. Die Anlage und deren Steuerung sind einfach aufgebaut.

Die erfindungsgemässe Lösung ist weder auf Wärmebehandlungen noch auf die Behandlung von Lebensmitteln be-schränkt. Bevorzugt wird sie aber zum Pasteurisieren beispielsweise von verpackten Wurstwaren oder Frischteigwaren eingesetzt.

Die Zeichnungen erläutern die Erfindung anhand von zwei Aus-füh-rungsbeispielen, auf die sie aber nicht eingeschränkt ist. Dabei zeigt die
Fig. 1 einen vertikalen Schnitt durch einen Pasteur mit übereinander liegenden Behandlungsabschnitten,
Fig. 2 einen vertikalen Schnitt durch einen Pasteurs mit Belad- und Entlad-Station,
Fig. 3 eine seitliche Ansicht eines Schubgestänges,
Fig. 4 eine schematische Darstellung von zwei Hubgestellen,
Fig. 5a eine Seitenansicht eines Elevators,
Fig. 5b einen Querschnitt durch den Elevator, und
Fig. 6 eine Draufsicht auf einen Pasteur.

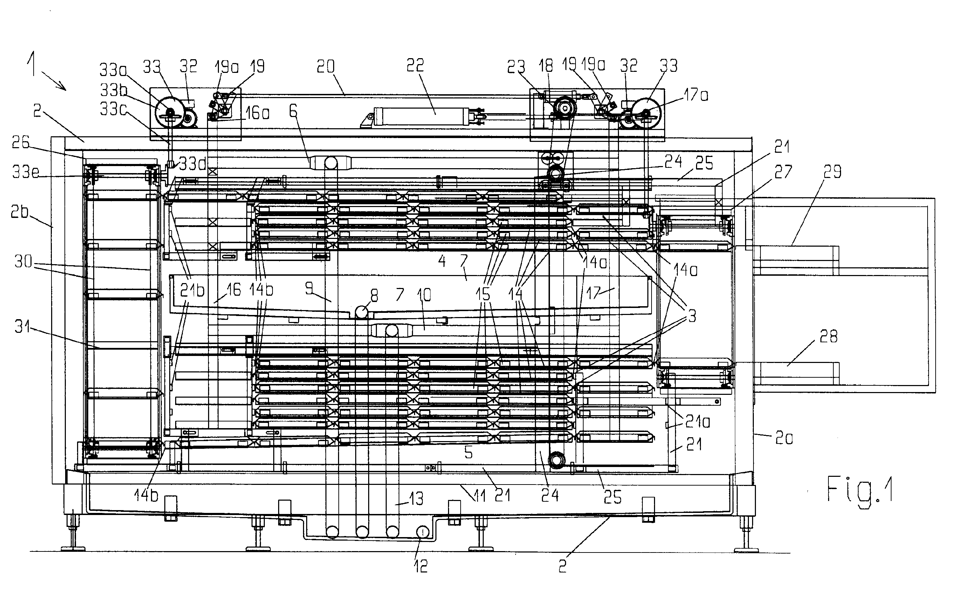

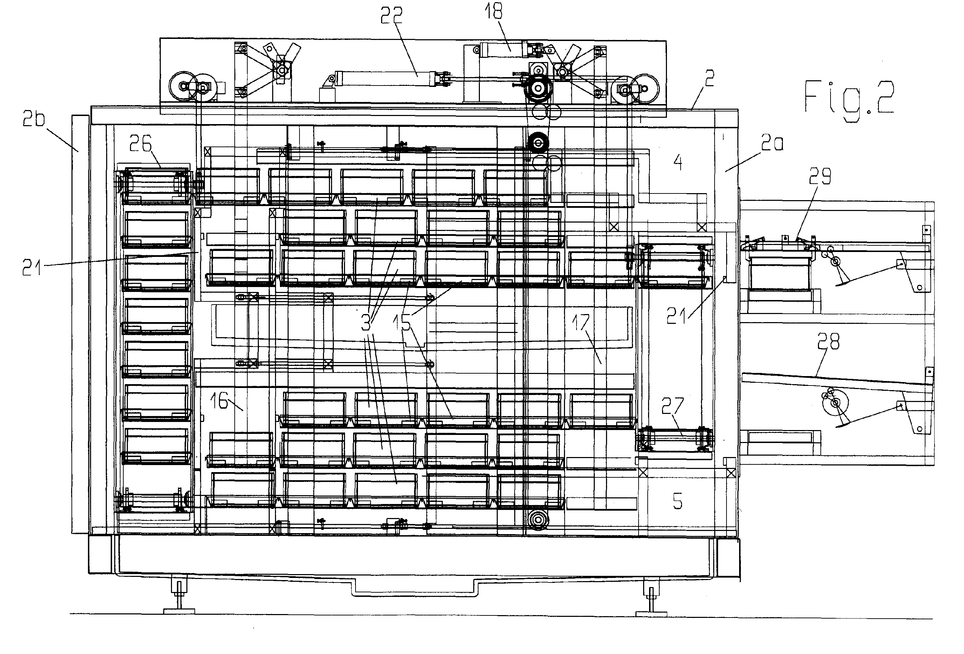

Fig. 1 und 2 zeigen je eine Vorrichtung 1 zum Durchführen von Wärmebehandlungen in der Form eines Pasteurs. Die beiden Ausführung werden je für unterschiedliche Produkte und Behandlungen eingesetzt und haben entsprechend unterschiedlich aufgebaute Behandlungszonen. Die Vorrichtung 1 umfasst einen Rahmen 2, der sich in Vorrichtungs-Längsrichtung von einer vorderen Seite 2a zu einer hinteren Seite 2b erstreckt. Am Rahmen 2 sind übereinander liegende Behandlungsabschnitte 3 angeordnet, wobei ein oberer Set von Behandlungsabschnitten 3 in einer Heizzone 4 und ein unterer Set in einer Kühlzone 5 liegt.

Die Heizzone 4 umfasst oben eine erste Austragsanordnung 6 aus der ein Heizmedium ausgetragen wird. Am unteren Ende der Heizzone 4 ist eine erste Auffangwanne 7 angeordnet, von der das Heizmedium über eine erste Ableitung 8, eine nicht dargestellte Heizvorrichtung und eine erste Zuleitung 9 wieder zur ersten Austragsanordnung 6 gelangt.

Die Kühlzone 5 ist analog zur Heizzone 4 aufgebaut und umfasst oben eine zweite Austragsanordnung 10 aus der ein Kühlmedium ausgetragen wird. Am unteren Ende der Kühlzone 5 ist eine zweite Auffangwanne 11 angeordnet, von der das Kühlmedium über eine zweite Ableitung 12, eine nicht dargestellte Kühlvorrichtung und eine zweite Zuleitung 13 wieder zur zweiten Austragsanordnung 10 gelangt.

Die Behandlungsabschnitte 3 umfassen Längsschienen 14, die auf beiden Längsseiten des Rahmens 2 auf den entsprechenden Niveaus angeordnet sind. Trays 15 liegen mit seitlichen Randbereichen beidseits auf den Längsschienen 14 auf. Die Längsschienen 14 erstrecken sich in Längsrichtung zwischen einem vorderen Schienenende 14a und einem hinteren Schienenende 14b. Auf der hinteren Seite 2b schliessen Aufnahmeplätze eines hinteren Hubgestelles 16 an die hinteren Schienenenden 14b der Behandlungsabschnitte 3 an. Auf der vorderen Seite 2a schliessen Aufnahmeplätze eines vorderen Hubgestelles 17 an die vorderen Schienenenden 14a der Behandlungsabschnitte 3 an. Bei Ein- und Ausgängen von Behandlungszonen erstrecken sich die Behandlungsabschnitte 3 bis zu den Elevatorvorrichtungen 26, 27 und somit auch über je einen Bereich mit einem Hubgestell. Die vorderen Schienenenden 14a liegen bei Ein- und Ausgängen somit direkt bei den Elevatorvorrichtungen 26, 27.

Die beiden Hubgestelle 16 und 17 sind in Vertikalführungen gehalten. Zur Betätigung der Hubgestelle 16, 17 ist ein Hub-Betätigungszylinder 18 auf der einen Seite mit dem Rahmen 2 und auf der anderen Seite mit einem um eine Schwenkachse schwenkbar gelagerten Winkelhebel 19 verbunden. Der Winkelhebel 19 beim Hub-Betätigungszylinder 18 ist über eine Kopplungsstange 20 mit einem weiteren Winkelhebel 19 verbunden. Von beiden Winkelhebeln 19 ist je ein Verbindungsschenkel mit dem oberen Ende 16a, 17a der Hubgestelle 16, 17 verbunden, wobei die beiden Verbindungsschenkel in entgegen gesetzten Richtungen von den jeweiligen Schwenkachsen wegführen, bzw. zwischen ihnen ein Winkel von 180° eingeschlossen ist. Bei einer gekoppelten Schwenkbewegung der Winkelhebel 19 wird jeweils ein Hubgestell angehoben und eines abgesenkt.

Mit einem Schubgestänge 21 werden Trays 15 auf Behandlungsabschnitten 3 während erster und zweiter Horizontaltakte in entgegengesetzten Richtung nach hinten bzw. nach vorne horizontal gegen die hintere bzw. vordere Seite 2b, 2a gestossen. Das Schubgestänge 21 ist in Förderrichtung nach hinten bzw. nach vorne verschiebbar gelagert und wird von mindestens einem Antriebselement, vorzugsweise einem Schub-Betätigungszylinder 22, bewegt. Die Linearbewegung des Schub-Betätigungszylinder 22 wird über eine Zahnstangen-Zahnradanordnung 23 in eine Drehbewegung übertragen, welche dann über Ketten auf zwei Querstangen 24 übertragen wird. Eine Querstange 24 ist im oberen und eine im unteren Endbereich des Schubgestänges 21 angeordnet und beide greifen auf beiden Seiten mit Zahnrädern in Zahnstangen 25 ein, wodurch das gesamte Schubgestänge 21 verklemmungsfrei in Längsrichtung vor- und zurück bewegt werden kann.

Auf der vorderen Seite der Vorrichtung 1 umfasst das Schubgestänge 21 erste Schiebekontakte 21a für Trays 15, die im vorderen Hubgestell 17 zu den Eingängen der Behandlungsabschnitte 3 bewegt wurden. Auf der hinteren Seite 2b der Vorrichtung 1 umfasst das Schubgestänge 21 zweite Schiebekontakte 21b für Trays 15, die im hinteren Hubgestell 16 zu den Eingängen der Behandlungsabschnitte 3 bewegt wurden.

Das Schubgestänge 21 und die vertikalen Teile der Vorrichtung 1 müssen so ausgebildet und angeordnet werden, dass die Bewegung des Schubgestänges nicht beeinträchtigt ist und die Schiebekontakte 21a, 21b an den gewünschten Stellen bei den Trays 15 in Schiebekontakt treten können.

Das Schubgestänge 21 und die Hubgestelle 16, 17 werden während verschiedener Fördertakte nacheinander bewegt, um Trays 15 entsprechend ihrer jeweiligen Position zu bewegen oder stehen zu lassen. Trays 15 auf Behandlungsabschnitten 3 mit einer Förderrichtung nach hinten werden vom Schubgestänge 21 mit den ersten Schiebekontakten 21a während erster Horizontaltakte nach hinten gegen die hintere Seite 2b gestossen. Mit der hinteren Hubvorrichtung 16 werden je anschliessend an einen ersten Horizontaltakt die bei der hinteren Seite 2b jeweils in Förderrichtung vordersten Trays 15 in ersten Vertikaltakten vertikal zum nächsten Behandlungsabschnitt 3 versetzt. Anschliessend an einen ersten Vertikaltakt werden die Trays 15 auf Behandlungsabschnitten 3 mit einer Förderrichtung nach vorne vom Schubgestänge 21 mit den zweiten Schiebekontakten 21 b während zweiter Horizontaltakte in einer Richtung nach vorne gegen die vordere Seite 2a bewegt. Mit der vorderen Hubvorrichtung 17 werden je anschliessend an einen zweiten Horizontaltakt die bei der vorderen Seite 2a jeweils in Förderrichtung vordersten Trays 15 in zweiten Vertikaltakten vertikal zum nächsten Behandlungsabschnitt 3 versetzt.

Die Heizzone 4 und die Kühlzone 5 sind beide im Gegenstromverfahren ausgelegt, wobei die Trays 15 jeweils unten in die Behandlungszone ein- und oben austreten sowie das Wärmetransfermedium oben eingetragen und unten aufgefangen wird.

Weil die Heizzone 4 über der Kühlzone 5 angeordnet ist, werden die Trays 15 bei der hinteren Seite 2b mit einer ersten Elevatorvorrichtung 26 getaktet vom Ausgang der Heizzone 4 zum Eingang der Kühlzone 5 nach unten gefördert. Die hintere Elevatorvorrichtung 26 wird während der ersten Vertikaltakte bewegt und hält während der Horizontaltakte einen Aufnahmeplatz für ein Tray 15 auf dem Niveau des Heizzonen-Ausgangs und einen Aufnahmeplatz auf dem Niveau des Kühlzonen-Eingangs.

Bei der vorderen Seite 2a fördert eine getaktete zweite Elevatorvorrichtung 27 Trays 15 vom Ausgang der Kühlzone 5 über eine in Fig. 2 dargestellte Entladstation 28 und eine Beladstation 29 zum Eingang der Heizzone 4. Die zweite Elevatorvorrichtung 27 wird während der zweiten Vertikaltakt bewegt und hält während der Horizontaltakte einen Aufnahmeplatz für ein Tray 15 auf dem Niveau des Kühlzonen-Ausgangs und einen Aufnahmeplatz auf dem Niveau des Heizzonen-Eingangs.

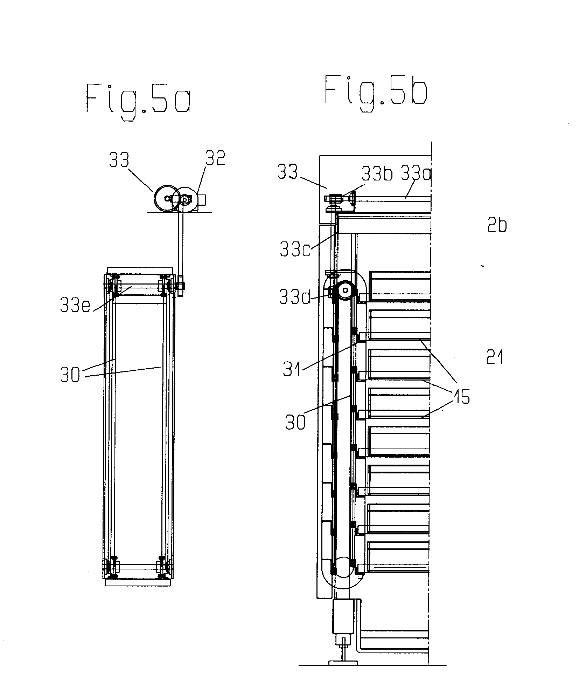

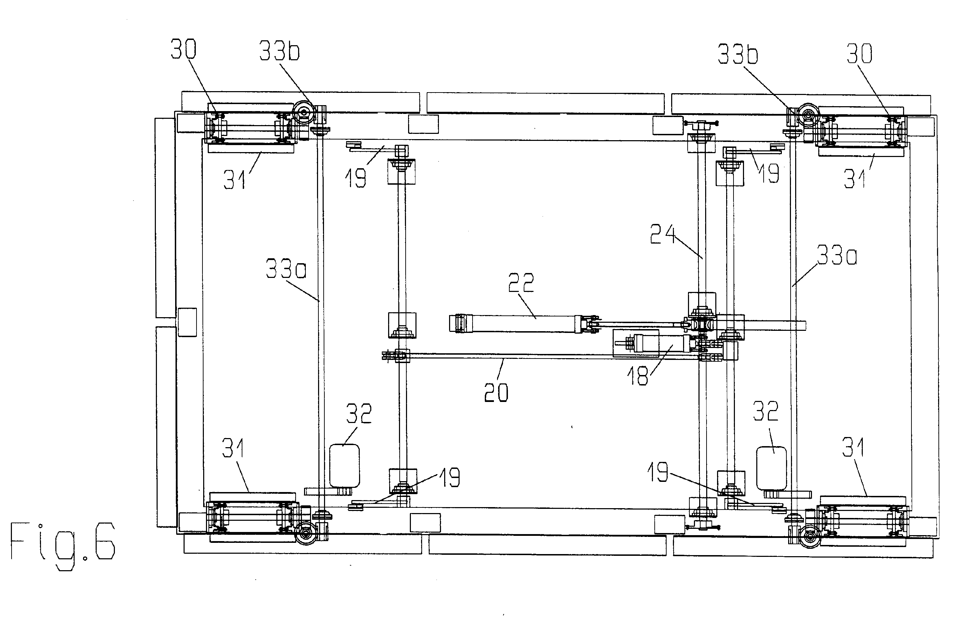

Die Elevatorvorrichtungen 26, 27 umfassen beidseits der Trays umlaufende Ketten 30 oder Bänder mit vorstehenden Auflageleisten 31 für die Trays 15, was aus den Fig. 5a, 5b und 6 besser ersichtlich ist. Mindestens ein Antriebsmotor 32 setzt die Ketten 30 phasenweise in Bewegung, wobei der Antrieb über eine Antriebsverbindung 33 vom Antriebsmotor 32 auf die Ketten 30 übertragen wird. Die Antriebsverbindung umfasst beispielsweise eine drehbar gelagerte Querstange 33a, die vom Antriebsmotor 32 in Drehung gesetzt wird. An beiden Endbereichen der Querstange 33a wird die Drehung über Winkelgetriebe 33b, vertikale Verbindungsstangen 33c und weitere Winkelgetriebe 33d auf Horizontalstangen 33e mit Zahnkränzen für die beiden Kettenpaare 30 übertragen. Die den Trays 15 zugewandten Auflageleisten 31 bewegen sich zum Absenken von Trays 15 nach unten und zum Heben von Trays 15 nach oben.

Damit alle Horizontalbewegungen der Trays 15 mit lediglich einem Schubgestänge 21 betätigt werden können, muss das Schubgestänge 21 nebst den Bewegungen von und in die Hubgestelle 16, 17 auch die Bewegungen von und in die Elevatoren 26, 27 gewährleisten. Dazu umfasst das Schubgestänge 21 auch bei den Eingängen der Heizzone 4 und der Kühlzone 5 je einen Schiebekontakt 21 a bzw. 21 b, mit dem ein Tray 15 von der entsprechenden Elevatorvorrichtung 27, 26 in den jeweils ersten Behandlungsabschnitt 3 der Heizzone 4 bzw. Kühlzone 5 gestossen wird.

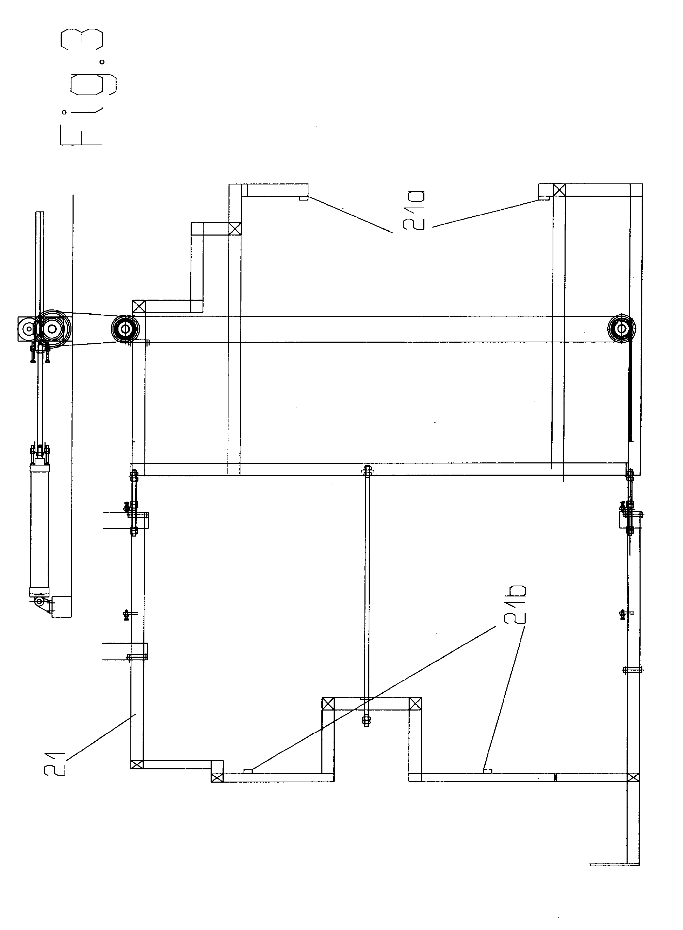

Fig. 3 zeigt das Schubgestänge 21 der Vorrichtung 1 gemäss Fig. 2. Auf der vorderen Seite 2a befinden sich in der Heizzone 4 zwei erste Schiebekontakt 21a, welche jeweils das hinterste Tray 15 nach hinten stossen, wobei eines von der zweiten Elevatorvorrichtung 27 und eines vom vorderen Hubgestell 17 gestossen wird. Die Längsposition der beiden ersten Schiebekontakte 21 a ist an die Lage des zu stossenden Trays angepasst und liegt entsprechend auf der vorderen Seite der Elevatorvorrichtung 27 bzw. des vorderen Hubgestells 17. Darunter, in der Kühlzone 5 befindet sich ein erster Schiebekontakt 21 a, welcher jeweils das hinterste Tray 15 nach hinten vom vorderen Hubgestell 17 weg stösst. Auf der hinteren Seite 2b befindet sich in der Heizzone ein zweiter Schiebekontakt 21 b, welcher jeweils das hinterste Tray 15 nach vorne vom hinteren Hubgestell 16 stösst. Darunter, in der Kühlzone befinden sich zwei zweite Schiebekontakte 21b, mit denen ein Tray 15 vom hinteren Hubgestell 16 und eines von der ersten Elevatorvorrichtung 26 gestossen wird. Die relative Lage dieser beiden zweiten Schiebekontakte 21 b entspricht dem Positionsunterschied zwischen der Elevatorvorrichtung und dem Hubgestell.

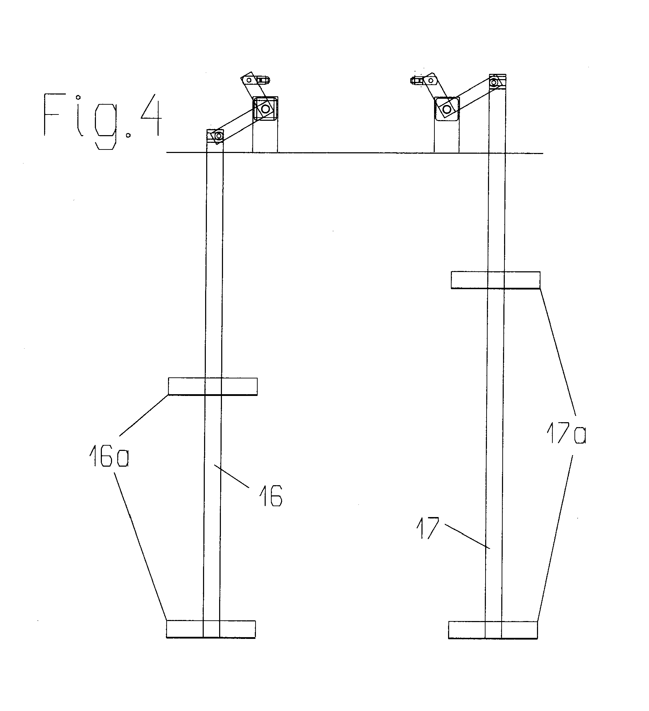

Fig. 4 zeigt die beiden Hubgestelle 16 und 17 der Vorrichtung 1 gemäss Fig. 2. Sowohl die Heizzone 4 als auch die Kühlzone 5 umfasst nur je drei übereinander liegende Behandlungsabschnitte 3. Davon ist auf jeder Seite einer als Ein- bzw. Ausgang der jeweiligen Behandlungszone ausgebildet, so dass auf jeder Seite nur ein vertikaler Hub zwischen zwei Behandlungsabschnitten benötigt wird. An den Hubgestellen 16, 17 ist entsprechend pro Behandlungszone je nur ein Aufnahmeplatz 16a bzw. 17a ausgebildet. Bei Behandlungszonen mit weiteren Behandlungsabschnitten würde pro weiteres Behandlungsabschnitt-Paar ein weiterer Aufnahmeplatz 16a bzw. 17a dazukommen. Der Pasteur gemäss Fig. 1 hat in der Heizzone 4 fünf Behandlungsabschnitte und somit Hubgestelle 16, 17, die in der Heizzone 4 je zwei Aufnahmeplätze 16a bzw. 17a umfassen. Die Kühlzone 5 hat sieben Behandlungsabschnitte und entsprechend haben die Hubgestelle 16, 17 in der Heizzone 4 drei Aufnahmeplätze 16a bzw. 17a.

## Patentansprüche

1. Verfahren zum Behandeln von Produkten in einer Vorrichtung (1) mit mindestens einer Behandlungszone (4, 5), die über-einander liegende horizontale Behandlungsabschnitte (3) aufweist, bei welchem Verfahren Trays (15) für die zu behandelnden Produkte mit einer Fördervorrichtung von einem Eintrittsbereich eines ersten Behandlungsabschnittes (3) durch die mindestens eine Behandlungszone (4, 5) zu einem Austritts-bereich eines letzten Behandlungsabschnittes (3) gefördert werden, wobei die Trays (15) auf direkt übereinander angeordneten Behandlungsabschnitten (3) in entgegen gesetzten Richtungen bewegt werden und beim Übergang von einem Behandlungsabschnitt (3) zum nächsten vertikal versetzt werden, **dadurch ge-kenn-zeichnet, dass** die Trays (15) in der Vorrichtung (1) entsprechend ihrer jeweiligen Position während verschiedener Fördertakte nacheinander bewegt werden, Trays (15) auf Behandlungsabschnitten (3) mit einer Förderrichtung nach hinten während erster Horizontaltakte gegen die hintere Seite (2b) der Vorrichtung (1) gestossen werden, je anschliessend an einen ersten Horizontaltakt die bei der hinteren Seite (2b) jeweils in Förderrichtung vordersten Trays (15) in ersten Vertikaltakten vertikal zum nächsten Behandlungsabschnitt (3) versetzt werden, je anschliessend an einen ersten Vertikaltakt die Trays (15) auf Behandlungsabschnitten (3) mit einer Förderrichtung nach vorne während zweiter Horizontaltakte gegen die vordere Seite (2a) der Vorrichtung (1) bewegt werden, je anschliessend an einen zweiten Horizontaltakt die bei der vorderen Seite (2a) jeweils in Förderrichtung vordersten Trays (15) in zweiten Vertikaltakten vertikal zum nächsten Behandlungsabschnitt (3) versetzt werden.

2. Verfahren nach Anspruch 1, **dadurch gekennzeichnet, dass** Trays (15) während der Vertikaltakte von je einem vorderen oder einem hinteren mit Trays (15) befüllten Hubgestell (16, 17) vertikal bewegt werden, das leere hintere bzw. vordere Hubgestell (17, 16) gleichzeitig mit dem gefüllten Hubgestell (16, 17) aber in entgegen gesetzter Richtung bewegt wird und vorzugsweise beide Hubgestelle (16, 17) vom gleichen Antrieb (18) angetrieben werden.

3. Verfahren nach Anspruch 1 oder 2, **dadurch gekennzeichnet, dass** eine Wärmebehandlung mit mindestens einer Heizzone (4) und mindestens einer Kühlzone (5) durchgeführt wird, die Wärmebehandlung in den Behandlungszonen (4, 5) im Gegenstromverfahren erfolgt, wobei die Trays (15) jeweils unten in die Behandlungszone (4, 5) ein- und oben austreten und das Wärmetransfermedium oben eingetragen und unten aufgefangen wird, und dass die Trays (15) mit einer getakteten ersten Elevatorvorrichtung (26) vom Ausgang der Heizzone (4) zum Eingang der Kühlzone (5) gefördert werden, wobei die erste Elevatorvorrichtung (26) während der ersten Vertikaltakte bewegt wird und während der Horizontaltakte einen Aufnahmeplatz für ein Tray (15) auf dem Niveau des Heizzonen-Ausgangs und einen Aufnahmeplatz auf dem Niveau des Kühlzonen-Eingangs stehen lässt.

4. Verfahren nach Anspruch 3, **dadurch gekennzeichnet, dass** die Trays (15) mit einer getakteten zweiten Elevatorvorrichtung (27) vom Ausgang der Kühlzone (5) über eine Entladstation (28) und eine Beladstation (29) zum Eingang der Heizzone (4) gefördert werden, wobei die zweite Elevatorvorrichtung (27) während der zweiten Vertikaltakte bewegt wird und während der Horizontaltakte einen Aufnahmeplatz für ein Tray (15) auf dem Niveau des Kühlzonen-Ausgangs und einen Aufnahmeplatz auf dem Niveau des Heizzonen-Eingangs stehen lässt.

5. Vorrichtung (1) zum Behandeln von Produkten mit mindestens einer Behandlungszone (4, 5), die über-einander liegende, sich von einem Eingang zu einem Ausgang erstreckende, horizontale Behandlungsabschnitte (3) aufweist, mit einer Fördervorrichtung zum Fördern von Trays (15) für die zu behandelnden Produkte von einem Eintrittsbereich eines ersten Behandlungsabschnittes (3) durch die mindestens eine Behandlungszone (4, 5) zu einem Austritts-bereich eines letzten Behandlungsabschnittes (3), wobei die Trays (15) auf direkt übereinander angeordneten Behandlungsabschnitten (3) in entgegen gesetzten horizontalen Förderrichtungen bewegt sowie beim Übergang von einem Behandlungsabschnitt (3) zum nächsten vertikal versetzt werden und die Vorrichtung (1) sich in einer horizontalen Richtung von einer vorderen zu einer hinteren Seite (2a, 2b) erstreckt, **dadurch gekennzeichnet, dass** die Fördereinrichtung ein Schubgestänge (21), auf der hinteren Seite (2b) der Behandlungsabschnitte (3) eine erste Hubvorrichtung und auf derer vorderen Seite (2a) der Behandlungsabschnitte (3) eine zweite Hubvorrichtung umfasst, welche Teile während verschiedener Fördertakte nacheinander zu bewegen sind, um Trays (15) entsprechend ihrer jeweiligen Position zu bewegen oder stehen zu lassen, wobei Trays (15) auf Behandlungsabschnitten (3) mit einer Förderrichtung nach hinten vom Schubgestänge (21) während erster Horizontaltakte gegen die hintere Seite (2b) der Vorrichtung (1) gestossen werden, mit der ersten Hubvorrichtung (16) je anschliessend an einen ersten Horizontaltakt die bei der hinteren Seite (2b) jeweils in Förderrichtung vordersten Trays (15) in ersten Vertikaltakten vertikal zum nächsten Behandlungsabschnitt (3) versetzt werden, je anschliessend an einen ersten Vertikaltakt die Trays (15) auf Behandlungsabschnitten (3) mit einer Förderrichtung nach vorne vom Schubgestänge (21) während zweiter Horizontaltakte gegen die vordere Seite (2a) der Vorrichtung (1) bewegt werden, mit der zweiten Hubvorrichtung (17) je anschliessend an einen zweiten Horizontaltakt die bei der vorderen Seite (2a) jeweils in Förderrichtung vordersten Trays (15) in zweiten Vertikaltakten vertikal zum nächsten Behandlungsabschnitt (3) versetzt werden.

6. Vorrichtung (1) nach Anspruch 5, **dadurch gekennzeichnet, dass** das Schubgestänge (21) in Förderrichtung nach hinten bzw. vorne verschiebbar gelagert ist, von mindestens einem Antriebselement, vorzugsweise einem Fluidzylinder (22), zu bewegen ist und auf der vorderen Seite (2a) der Vorrichtung (1) erste Schiebekontakte (21a) für Trays (15) bei den Eingängen der Behandlungsabschnitte (3) mit einer Förderrichtung nach hinten sowie auf der hinteren Seite (2b) der Vorrichtung (1) zweite Schiebekontakte (2b) für Trays (15) bei den Eingängen der Behandlungsabschnitte (3) mit einer Förderrichtung nach vorne aufweist.

7. Vorrichtung (1) nach Anspruch 5 oder 6, **dadurch gekennzeichnet, dass** die Hubvorrichtungen je ein Hubgestell (16, 17) umfassen das vertikal geführt, von einem Antrieb (18) zu betätigen ist und den Eingängen bzw. Ausgängen der Behandlungsabschnitte (3) zugeordnete Aufnahmeplätze für die Trays (15) umfasst, wobei während eines Horizontaltaktes von den Behandlungsabschnitten (3) mit der gleichen Förderrichtung Trays (15) auf die daran anschliessenden Aufnahmeplätze des Hubgestelles (16, 17) gestossen werden, im anschliessenden Vertikaltakt das Hubgestell (16, 17) mit eingeschobenen Trays (15) gehoben wird und die Trays (15) nach dem vertikalen Versetzen auf nächsten Behandlungsabschnitten (3) während eines Horizontaltaktes vom Hubgestell (16, 17) aus in die Behandlungsabschnitte (3) gestossen werden.

8. Vorrichtung (1) nach Anspruch 7, **dadurch gekennzeichnet, dass** die beiden Hubgestelle (16, 17) von einem gemeinsamen Antrieb (18) über eine Übertragungseinrichtung gleichzeitig je in entgegen gesetzten Richtungen angetrieben sind.

9. Vorrichtung (1) nach einem der Ansprüche 5 bis 8, **dadurch gekennzeichnet, dass** als Behandlungszonen (4, 5) mindestens eine Heizzone (4) und mindestens eine Kühlzone (5) ausgebildet sind, die Behandlungszonen (4, 5) zum Durchführen von Wärmebehandlung im Gegenstromverfahren ausgelegt sind, wobei die Trays (15) jeweils unten in die Behandlungszone (4, 5) ein- und oben austreten sowie das Wärmetransfermedium oben eingetragen und unten aufgefangen wird, und dass die Heizzone (4) über der Kühlzone (5) angeordnet ist.

10. Vorrichtung (1) nach Anspruch 9, **dadurch gekennzeichnet, dass** die Fördervorrichtung eine erste Elevatorvorrichtung (26) umfasst, welche die Trays (15) getaktet vom Ausgang der Heizzone (4) zum Eingang der Kühlzone (5) fördert, wobei die erste Elevatorvorrichtung (26) während der ersten Vertikaltakte zu bewegen ist und während der Horizontaltakte einen Aufnahmeplatz für ein Tray (15) auf dem Niveau des Heizzonen-Ausgangs und einen Aufnahmeplatz auf dem Niveau des Kühlzonen-Eingangs stehen lässt.

11. Vorrichtung (1) nach Anspruch 9 oder 10, **dadurch gekennzeichnet, dass** die Fördervorrichtung eine getaktete zweite Elevatorvorrichtung (27) umfasst, welche die Trays (15) vom Ausgang der Kühlzone (5) über eine Entladstation (28) und eine Beladstation (29) zum Eingang der Heizzone (4) fördert, wobei die zweite Elevatorvorrichtung (27) während der zweiten Vertikaltakte zu bewegen ist und während der Horizontaltakte einen Aufnahmeplatz für ein Tray (15) auf dem Niveau des Kühlzonen-Ausgangs und einen Aufnahmeplatz auf dem Niveau des Heizzonen-Eingangs stehen lässt.

12. Vorrichtung (1) nach Anspruch 10 oder 11, **dadurch gekennzeichnet, dass** das Schubgestänge (21) bei mindestens einem Behandlungszonen-Eingang einen Schiebekontakt (21 a, 21 b) umfasst, mit dem ein Tray (15) von der entsprechenden Elevatorvorrichtung (26, 27) in den ersten Behandlungsabschnitt (3) der Behandlungszone (4, 5) zu stossen ist.
